# EUROPEAN PATENT APPLICATION

(11) **EP 4 421 908 A1**
(43) Date of publication of application: **28.08.2024**
(21) Application number: 23798878.7
(22) Date of filing: 29.08.2023
(51) Int. Cl.: H01M 4/36, H01M 4/62, H01M 4/505, H01M 4/525, H01M 4/131, H01M 10/0525

(54) **COMPOSITE POSITIVE ELECTRODE MATERIAL AND PREPARATION METHOD THEREFOR, POSITIVE ELECTRODE SHEET, BATTERY, AND ELECTRIC DEVICE**

(30) Priority: 28.12.2022 CN 202211695864
(71) Applicant: Tianjin B&M Science And Technology Co., Ltd., Tianjin 300384 (CN)
(72) Inventor: LV, Fei, Tianjin 300384 (CN); CHEN, Dexian, Tianjin 300384 (CN); XU, Ning, Tianjin 300384 (CN); WU, Mengtao, Tianjin 300384 (CN)
(74) Representative: Gill Jennings & Every LLP
(86) International application number: PCT/CN2023/115479
(87) International publication number: WO 2024/139321

(57) **Abstract**

The present application discloses a composite cathode material and a method for preparing the same, a positive electrode plate, a battery, and an electrical device. The composite cathode material includes a cathode bulk and a coating layer disposed on a surface of the cathode bulk. The coating layer includes a subsurface layer and a surface layer disposed on the surface of the cathode bulk in sequence. The subsurface layer includes a phosphorus-containing electrolyte, and the surface layer includes a boron-containing electrolyte. The phosphorus-containing electrolyte is represented by Liₐ₁X1_{b1}PO₄, where 0 <a1≤5, and 0≤b1≤5. The boron-containing electrolyte is represented by Liₐ₂X2_{b2}B ᵣ₁O₄, where 0≤a2≤3, 0≤b2≤3, and 0<r1≤5. X1 and X2 are independently selected from one or more of Ni, Co, Mn, Al, B, Y, Zr, Sr, La, Ti, Mg, Zn, Fe, Nb, Ge, or Ce.

## Description

### CROSS-REFERENCE TO RELATED APPLICATION

This application claims priority to Chinese patent application No. 202211695864.0, filed on December 28, 2022, and titled "COMPOSITE CATHODE MATERIAL, METHOD FOR PREPARING THE SAME, POSITIVE ELECTRODE PLATE, BATTERY, AND ELECTRICAL DEVICE", the contents of which is hereby incorporated by reference in its entirety.

### TECHNICAL FIELD

The present application belongs to the field of battery technology, and specifically relates to a composite cathode material, a method for preparing the same, a positive electrode plate, a battery, and an electrical device.

### BACKGROUND

The emergence of secondary batteries such as lithium-ion batteries, characterized by high capacity, high voltage, high-temperature resistance, and portability, is driving the world into a new energy era. Secondary batteries have found extensive applications in the fields such as electric vehicles, aerospace, energy storage devices, and data products.

In the field of electric vehicles, the rate performance and high-temperature storage performance of secondary batteries are two important indicators for evaluating the performance of secondary batteries. Among them, the cathode material in the battery system is the decisive factor. In the existing cathode material system, lithium-ion battery cathode materials such as ternary cathode materials are widely used due to their advantages of high specific energy density and good cycling performance. However, as the number of charge-discharge cycles increases, the secondary batteries made of conventional cathode materials exhibit a sharp decline in rate performance and especially high-temperature storage performance , failing to meet the increasing requirements for the performance of battery.

### SUMMARY

In view of this, the present application provides a composite cathode material, a method for preparing the same, a positive electrode plate, a battery, and an electrical device.

An aspect of the present application provides a composite cathode material, including a cathode bulk and a coating layer disposed on a surface of the cathode bulk. The coating layer includes a subsurface layer and a surface layer disposed on the surface of the cathode bulk in sequence. The subsurface layer includes a phosphorus-containing electrolyte, and the surface layer includes a boron-containing electrolyte. The phosphorus-containing electrolyte is represented by Liₐ₁X1_{b1}PO₄, where 0<a1≤5, 0≤b1≤5. The boron-containing electrolyte is represented by Liₐ₂X2_{b2}B ᵣ₁O₃, where 0≤a2≤3, 0≤b2≤3, and 0<r1≤5. X1 and X2 are independently selected from one or more of Ni, Co, Mn, Al, Y, Zr, Sr, La, Ti, Mg, Zn, Fe, Nb , Ge, and Ce.

In some embodiments, only one of b1 and b2 is equal to 0.

In some embodiments, 1≤a1≤1.1, 0.8≤b1≤1; and/or 1≤a2≤3, 0.8≤r1≤1.

In some embodiments, a thickness of the coating layer is in a range from 5 nm to 200 nm.

In some embodiments, a mass ratio of the coating layer to the cathode bulk is in a range from 0.001:1 to 0.5:1.

In some embodiments, in the coating layer, the subsurface layer and the surface layer are bonded through O-B-P bonds.

In some embodiments, in the coating layer, a molar ratio of phosphorus (P) elements to boron (B) elements is in a range from 1:0.01 to 1:10.

In some embodiments, a thickness ratio of the subsurface layer to the surface layer is in a range from 1:0.01 to 1:10.

In some embodiments, the coating layer includes a material represented by formula I:

Liₐ₃X3_{b3}T_{c}O_{d} I;

wherein X3 includes one or more of Ni, Co, Mn, Al, Y, Zr, Sr, La, Ti, Mg, Zn, Fe, Nb, Ge, and Ce; T includes P and B; 0<a3≤2, 0<b3≤1, 0<c≤1, and 3≤d≤4.

In some embodiments, the cathode bulk is a ternary cathode bulk, represented by Li_{w}NiₓCo_{y}M_{(1-x-y)}O₂, where 0.95≤w≤1.05, 0<x<1, 0<y<1, 0<x+y<1, and M includes at least one of Mn, Al, B, Y, Zr, Sr, La, Ti, Mg, Zn, Fe, Nb, Ge, or Ce.

In some embodiments, a particle size of the cathode bulk is in a range from 3 µm to 15 µm.

Another aspect of the present application provides a composite cathode material, including a cathode bulk and a coating layer disposed on a surface of the cathode bulk. The coating layer includes a subsurface layer and a surface layer disposed on the surface of the cathode bulk in sequence. The subsurface layer includes a phosphorus-containing electrolyte, and the surface layer includes a boron-containing electrolyte;. The coating layer includes a material represented by formula I:

Liₐ₃X3_{b3}T_{c}O_{d} I;

wherein X3 includes one or more of Ni, Co, Mn, Al, Y, Zr, Sr, La, Ti, Mg, Zn, Fe, Nb, Ge, and Ce; T includes P and B; 0<a3≤2, 0<b3≤1, 0<c≤1, and 3≤d≤4.

Another aspect of the present application provides a composite cathode material, including a cathode bulk and a coating layer disposed on a surface of the cathode bulk. The coating layer includes a subsurface layer and a surface layer disposed on the surface of the cathode bulk in sequence. The subsurface layer includes a phosphorus-containing electrolyte, and the surface layer includes a boron-containing electrolyte. In the coating layer, the subsurface layer and the surface layer are combined through O-B-P bonds.

Another aspect of the present application provides a method for preparing the above-described composite cathode material, including the following steps of:
performing a first sintering to the cathode bulk mixed with a phosphate, thereby forming a cathode material preform; and
performing a second sintering to the cathode material preform mixed with a boride, thereby forming the composite cathode material.

In some embodiments, a mass ratio of the cathode bulk, the phosphate, and the boride is 1:(0.0005 to 0.5):(0.0005 to 0.5).

In some embodiments, the first sintering is performed at a temperature in a range from 200 °C to 800 °C for a time period in a range from 5 hours (h) to 30 h.

In some embodiments, the second sintering is performed at a temperature in a range from 200 °C to 800 °C for a time period in a range from 5 h to 30 h.

In some embodiments, the phosphate includes at least one of nickel phosphate, cobalt phosphate, manganese phosphate, lithium phosphate, aluminum phosphate, zirconium phosphate, titanium phosphate, yttrium phosphate, strontium phosphate, tungsten phosphate, lanthanum phosphate, ammonium dihydrogen phosphate, or diammonium hydrogen phosphate.

In some embodiments, the boride includes at least one of boric acid, boron oxide, lithium borate, or sodium borohydride.

Another aspect of the present application provides a positive electrode plate, including a current collector and a cathode active layer disposed on a surface of the current collector. The cathode active layer includes the above-described composite cathode material.

Another aspect of the present application provides a battery, including the above-described composite cathode material.

Another aspect of the present application provides an electrical device, including the above-described battery.

### BRIEF DESCRIPTION OF THE DRAWINGS

In order to illustrate the embodiments of the present application or the technical solution in the prior art more clearly, the drawings to be referred in description of the embodiments or the prior art will be described briefly. Apparently, the following described drawings are merely for some embodiments of the present application, and other drawings can be derived by those of ordinary skill in the art without any creative effort.
FIG. 1 shows a scanning electron microscopy (SEM) image of a composite cathode material prepared in Example 1 of the present application.
FIG. 2 shows a transmission electron microscopy (TEM) image of a composite cathode material prepared in Example 10 of the present application.
FIG. 3 shows an energy dispersive X-ray spectroscopy (EDS) image of a composite cathode material prepared in Example 12 of the present application.
FIG. 4 is a comparison graph of cycle performances at 45 °C of the batteries prepared in Example 1, Example 2, Comparative Example 1, Comparative Example 2, and Comparative Example 4 of the present application.

### DETAILED DESCRIPTION

The present application will now be described in detail with reference to the accompanying drawings in order to facilitate understanding of the present application. The drawings show some preferred embodiments of the present application. However, the present application may be implemented in many different forms and is not limited to the embodiments described herein. In contrast, the specific embodiments provided herein are only for understanding the disclosure of the present application more thorough and comprehensive.

Unless otherwise indicated, all technical and scientific terms used herein have the same meaning as those normally understood by those of ordinary skill in the art. The terms used herein in the specification of the present application are for the purpose of describing specific embodiments only and are not intended to limit the present application. The term "and/or" as used herein includes any and all combinations of one or more relevant listed items.

In the present application, terms such as "preferably", "more preferably", etc., refer to embodiments that may provide certain beneficial effects under certain circumstances. However, in the same or other circumstances, different embodiments may also be preferable. Furthermore, referring one or more embodiments as preferable does not imply that other embodiments are not usable, nor is it intended to exclude other embodiments from the scope of the present application.

When a numerical range is disclosed herein, the range is considered as being continuous and includes the minimum and maximum values of the range, as well as each value between the minimum and maximum values. Further, when the range is for integers, each integer between the minimum and maximum values of the range is included. In addition, when multiple ranges are provided to describe features or characteristics, the ranges can be combined. In other words, unless otherwise indicated, all ranges disclosed herein shall be understood to include any and all sub-ranges included therein.

The researchers of the present application have found that the rate performance of conventional secondary batteries during recycling especially at high temperatures will rapidly deteriorate, mainly due to the following reasons: (1) At high temperatures, at the interface between the positive electrode and the electrolyte, the ions such as Ni⁴⁺ and Li⁺ in the cathode bulk react with the electrolyte, resulting in an increase in both interface impedance and cycling direct current internal resistance (DCR), and a capacity loss. (2) Side reactions at the cathode /electrolyte interface produce HF, which further corrodes the interface, causing dissolution of transition metals such as Ni, Co, and Mn from the surface and resulting in lattice reconstruction of the surface. This adversely affects the structure and electrochemical performance of the cathode material.

In the related art, surface coating of the cathode material is commonly used to improve the stability of the cathode/electrolyte interface in the batteries. Metal oxides, such as inert nano-sized inorganic oxides (e.g., aluminum oxide, magnesium oxide, titanium oxide, zinc oxide, etc.) are typically used for solid-phase coating of the material. However, the coating methods in the related art have the following drawbacks: (1) The formed coating layer usually distributed in the form of points or islands, with uneven interface thickness and incomplete coverage, resulting in poor electrochemical performance of the battery at high temperatures. (2) The structure of the nano-oxide coating layer formed by the conventional solid-phase method is loose and prone to react with HF, exposing a new interface, leading to the dissolution of transition metals and causing continuous deterioration of the structure and performance at the interface. Consequently, this reduces the high-temperature storage performance and rate performance of the material.

In the related art, attempts have been made to enhance the cycling stability of the material by low-temperature coating after mixing ternary precursors with phosphates. The amount of residual alkali in the resulting product is reduced, but the rate performance of the product is not improved. Furthermore, the capacity degradation during long-term cycling or at high temperatures still requires to be further optimized.

The researchers of the present application obtained the technical solutions of the present application after conducting a large number of creative experiments and researches.

An embodiment of the present application provides a composite cathode material, including a cathode bulk and a coating layer disposed on a surface of the cathode bulk. The coating layer includes a subsurface layer and a surface layer disposed on the surface of the cathode bulk in sequence. The subsurface layer is disposed between the cathode bulk and the surface layer. The subsurface layer includes a phosphorus-containing electrolyte, and the surface layer includes a boron-containing electrolyte.

The phosphorus-containing electrolyte is represented by Liₐ₁X1_{b1}PO₄, where 0< a1≤5, and 0≤b1≤5.

The boron-containing electrolyte is represented by Liₐ₂X2_{b2}B ᵣ₁O₃, where 0≤a2≤3, 0≤b2≤3, and 0<r1≤5.

X1 and X2 are independently selected from one or more of Ni, Co, Mn, Al, Y, Zr, Sr, La, Ti, Mg, Zn, Fe, Nb, Ge, and Ce.

In the above embodiment of the composite cathode material, the components of the subsurface layer, which is adjacent to the cathode bulk, mainly include a phosphorus-containing electrolyte with a dense structure. The phosphorus-containing electrolyte has a dense structure and high lithium ion and electron conductivity (≥10⁻⁴cm/S), which can effectively isolate the cathode from the electrolyte, inhibiting the interface reactions, and reducing DCR. In addition, the phosphorus-containing electrolyte has a certain level of electrochemical activity, and can release Li⁺ ions for ion exchange in the first cycle, which increases the first-cycle discharge capacity to some extent. In practical application, some of the boride in the boron-containing electrolyte can fill into the voids in the grain boundaries in the molten form, effectively preventing the grain boundary from forming cracks in the composite cathode material during long-term cycling or at high rates. In addition, abundant O-B-P bonds can be formed in a "spider web" form, exhibiting an anchoring effect. This not only further enhances the structural stability and mechanical strength of the coating layer, but also increases the lithium ion and electronic conductivity of the coating layer, thus simultaneously improving the high-temperature storage performance and rate performance of the battery.

In some embodiments, b1 is 0, and the phosphorus-containing electrolyte is Liₐ₁PO₄. In some embodiments, b2 is 0, and the boron-containing electrolyte is Liₐ₂BO₃.

In some embodiments, b1 and b2 are not equal to 0 at the same time.

In some embodiments, 0<a1≤3; optionally, 1≤a1≤1.1; and more specifically, a1=1.

In some embodiments, a1+(b1 × m)=3, where m is the oxidation number of X1.

In some embodiments, 0≤a2≤3; optionally, 1≤a2≤3; and more specifically, a2=3.

In some embodiments, a2+(b2×n)+(r1×3)=6, where n is the oxidation number of X2. In some embodiments, a2 is 0.

In some embodiments, 0.8≤r1≤1; and more specifically, r1=1.

In some embodiments, in the coating layer, the subsurface layer and the surface layer are bonded through O-B-P bonds.

The subsurface layer and the surface layer are bonded through the O-B-P bonds formed at the contact interface therebetween. The large number of O-B-P bonds forms a network structure similar to a "spider web". This network structure is mainly located between the subsurface layer and the surface layer.

In some embodiments, a thickness of the coating layer is in a range from 5 nm to 200 nm.

By controlling the thickness of the coating layer, the coating effect and stability can be further improved, thereby improving the electrochemical performance of the battery.

If the coating layer is too thin, it may not sufficiently inhibit the reactions at the cathode/electrolyte interface. If the coating layer is too thick, it may lead to instability at the interface of the cathode material, hindering the optimal electrochemical performance of the cathode material.

Optionally, the thickness of the coating layer is in a range from 5 nm to 160 nm, from 5 nm to 80 nm, from 5 nm to 50 nm, or from 5 nm to 30 nm. Any value in the range from 5 nm to 200 nm can be taken as the thickness of the coating layer. This range is continuous and includes the end points. For example, the thickness of the coating layer can be, but is not limited to 5 nm, 10 nm, 30 nm, 50 nm, 80 nm, 120 nm, 140 nm, 160 nm, 180 nm, or 200 nm.

In some embodiments, the mass ratio of the coating layer to the cathode bulk is in a range from 0.001:1 to 0.5:1; that is, any value in the range from 0.001:1 to 0.5:1 can be taken. This range is continuous and includes the end points. For example, the mass ratio of the coating layer to the cathode bulk can be, but is not limited to 0.001:1, 0.005:1, 0.02:1, 0.05:1, 0.1:1, 0.2:1, 0.5:1, or within a range defined by any of the above two values.

In some embodiments, the mass ratio of the coating layer to the cathode bulk is in a range from 0.001:1 to 0.2:1, from 0.001:1 to 0.1:1, from 0.005:1 to 0.5:1, from 0.005:1 to 0.2:1, from 0.005:1 to 0.1:1, from 0.02:1 to 0.5:1, from 0.02:1 to 0.2:1, from 0.02:1 to 0.1:1, from 0.05:1 to 0.5:1, from 0.05:1 to 0.2:1, or from 0.05:1 to 0.1:1.

In some embodiments, in the coating layer, the molar ratio of P elements to B elements is in a range from 1:0.01 to 1:10, and in some embodiments, in a range from 1:0.01 to 1:5, from 1:0.01 to 1:1, from 1:0.01 to 1:0.1, from 1:0.1 to 1:1, from 1:0.1 to 1:5, or from 1:1 to 1:10.

In some embodiments, the thickness ratio of the subsurface layer to the surface layer is in a range from 1:0.01 to 1:10, and in some embodiments, in a range from 1:0.01 to 1:5, from 1:0.01 to 1:1, from 1:0.01 to 1:0.1, from 1:0.1 to 1:1, from 1:0.1 to 1:5, or from 1:1 to 1:10.

In some embodiments, the coating layer includes a material represented by formula I:

Liₐ₃X3_{b3}T_{c}O_{d} I;

wherein X3 includes one or more of Ni, Co, Mn, Al, Y, Zr, Sr, La, Ti, Mg, Zn, Fe, Nb, Ge, and Ce; T includes P and B; 0<a3≤2, 0<b3≤1, 0<c≤1, and 3≤d≤4.

The coating layer in the composite cathode material of the embodiments of the present application can inhibit the dissolution of transition metals, and in the batteries, can effectively stabilize the contact interface between the cathode and the electrolyte, reducing corrosion and structural damage to the interface, thereby slowing down the increase of DCR and improving the high-temperature storage performance and rate performance of the battery. The boride elements, by reacting with other substances, can form a compound with a relatively low melting point, which can fill the voids in the grain boundaries, effectively preventing the grain boundary from forming cracks in the composite cathode material during long-term cycling or at high rates. In addition, P and O atoms are electron-rich atoms, and B atoms are electron-deficient atoms, and thus abundant O-B-P bonds can be formed in a "spider web" form, exhibiting an anchoring effect. This not only further enhances the structural stability and mechanical strength of the coating layer, but also increases the lithium ion and electron conductivity of the coating layer, thus simultaneously improving the high-temperature storage performance and rate performance of the battery.

In some embodiments, the cathode bulk is a ternary cathode bulk, represented by Li_{w}NiₓCo_{y}M_{(1-x-y)}O₂, where 0.95≤w≤1.05, 0<x<1, 0<y<1, 0<x+y<1, and M includes at least one of Mn, Al, B, Y, Zr, Sr, La, Ti, Mg, Zn, Fe, Nb, Ge, or Ce. In some embodiments, w=1, and the chemical formula of the ternary cathode bulk is LiNiₓCo_{y}Mn_{(1-x-y)}O₂.

It can be understood that the ternary cathode bulk in the present application can be selected from various ternary cathode materials commonly used in the art, for example, can be at least one of LiNi_{1/3}Co_{1/3}Mn_{1/3}O₂ (also referred to as NCM333), LiNi_{0.5}Co_{0.2}Mn_{0.3}O₂ (also referred to as NCM523), LiNi_{0.5}Co_{0.25}Mn_{0.25}O₂ (also referred to as NCM211), LiNi_{0.6}Co_{0.2}Mn_{0.2}O₂ (also referred to as NCM622), LiNi_{0.8}Co_{0.1}Mn_{0.1}O₂ (also referred to as NCM811), or lithium nickel cobalt aluminum oxide (such as LiNi_{0.85}Co_{0.15}Al_{0.05}O₂).

In some embodiments, the particle size of the cathode bulk is in a range from 3 µm to 15 µm.

In some embodiments, the particle size of the cathode bulk can be 3 µm, 4 µm, 5 µm, 6 µm, 7 µm, 8 µm, 9 µm, 10 µm, 11 µm, 12 µm, 13 µm, or 15 µm, or within a range defined by any of the above two values.

An embodiment of the present application provides a method for preparing a composite cathode material, including the following steps S10 to S20.

In step S 10, a first sintering to the cathode bulk mixed with a phosphate is performed, thereby forming a cathode material preform.

In step S20, a second sintering to the cathode material preform mixed with a boride is performed, thereby forming the composite cathode material.

In the above embodiment of the preparation method, the cathode bulk is firstly mixed with the phosphate, followed by the first sintering, thereby forming a phosphorus-containing electrolyte layer with a dense structure and high lithium ion and electron conductivity (≥10⁻⁴cm/S) on the surface of the cathode bulk. As a result, the cathode can be effectively isolated from the electrolyte, inhibiting the interface reactions, and reducing DCR. In addition, the phosphorus-containing electrolyte has a certain level of electrochemical activity, and can release Li⁺ ions for ion exchange in the first cycle, which increases the first-cycle discharge capacity to some extent. The cathode material preform is further mixed with the boride, followed by the second sintering, thereby forming the boron-containing electrolyte. Some of the boride in the boron-containing electrolyte can fill into the voids in the grain boundaries in the molten form, effectively preventing the grain boundary from forming cracks in the composite cathode material during long-term cycling or at high rates. More importantly, the boron-containing electrolyte and the phosphorus-containing electrolyte can form abundant O-B-P bonds in a "spider web" form, exhibiting an anchoring effect. This not only further enhances the structural stability and mechanical strength of the coating layer, but also increases the lithium ion and electron conductivity of the coating layer, thus improving the high-temperature storage performance and rate performance of the battery.

In some embodiments, in step S10, the cathode bulk can be mixed with the phosphate by using a liquid-phase method or a solid-phase method. The liquid-phase method is generally a co-precipitation method for coating the phosphate onto the bulk material. The solid-phase method simply involves uniformly mixing the bulk material with the phosphate powder and subsequently sintering the mixture. Further, in step S10, the cathode bulk, the phosphate, and an X1-containing oxide can be mixed together, followed by the first sintering. Optionally, the amount of the X1-containing oxide can be adjusted according to the composition of the phosphorus-containing electrolyte.

In some embodiments, in step S20, the cathode material preform can be mixed with the boride by using a solid-phase method, i.e., directly uniformly mixing the cathode material preform with the boride and subsequently sintering the mixture. Further, in step S20, the cathode material preform, the boride, and an X2-containing oxide can be mixed together, followed by the first sintering. Optionally, the amount of the X2-containing oxide can be adjusted according to the composition of the boron-containing electrolyte.

In some embodiments, the first sintering is performed at a temperature in a range from 200 °C to 800 °C for a time period in a range from 5 h to 30 h.

In some embodiments, the second sintering is performed at a temperature in a range from 200 °C to 800 °C for a time period in a range from 5 h to 30 h.

The above-described steps of sintering can be performed at, but not limited to, a temperature of 200°C, 300°C, 400°C, 500°C, 600°C, 700°C, or 800°C, etc.

The above-described steps of sintering can be performed for, but not limited to, a time period of 5 h, 10 h, 15 h, 20 h, 25 h, or 30 h, etc.

In some embodiments, the mass ratio of the cathode bulk, the phosphate, and the boride is 1:(0.0005 to 0.5):(0.0005 to 0.5).

The mass ratio of the above raw materials can be adjusted to control the thickness and uniformity of the formed coating layer.

In some embodiments, the phosphate includes at least one of nickel phosphate, cobalt phosphate, manganese phosphate, lithium phosphate, aluminum phosphate, zirconium phosphate, titanium phosphate, yttrium phosphate, strontium phosphate, tungsten phosphate, lanthanum phosphate, ammonium dihydrogen phosphate, or diammonium hydrogen phosphate.

In some embodiments, the boride includes at least one of boric acid, boron oxide, lithium borate, or sodium borohydride.

In some embodiments, the phosphate and/or boride may not contain lithium. Lithium in the phosphorus-containing electrolyte of the subsurface layer and/or the boron-containing electrolyte of the surface layer may solely come from the cathode bulk. In other embodiments, the phosphate and/or boride may contain lithium, i.e., part of the lithium in the phosphorus-containing electrolyte of the subsurface layer may come from the cathode bulk, while the other part of the lithium may come from the phosphate and/or boride.

In some embodiments, step S10 further includes a step of pulverizing the cathode material preform after the first sintering.

In some embodiments, in step S10 and/or step S20, the first sintering and/or the second sintering is performed in an oxygen-containing atmosphere.

The oxygen-containing atmosphere can be air or oxygen gas.

The above preparation method is simple in process and easy to carry out for large-scale production.

In the present application, the above-described cathode bulk can be prepared by using conventional methods well known to those skilled in the art. For example, if the cathode bulk is a ternary cathode bulk, it can be prepared according to the following method.

A nickel salt, a cobalt salt, and an M-containing salt are dissolved in deionized water and mixed uniformly to form a salt solution. Under nitrogen atmosphere protection and stirring, an alkali solution is introduced into the salt solution for precipitation. The pH of the base solution is controlled to be 10.0 to 12.0 using ammonia water. After the precipitation, the precipitate is washed with deionized water to obtain a ternary hydroxide precursor. Then, the ternary hydroxide precursor is sintered to obtain the ternary cathode bulk. M includes at least one of Mn, Al, B, Y, Zr, Sr, La, Ti, Mg, Zn, Fe, Nb, Ge, or Ce.

The chemical formula of the ternary hydroxide precursor is Niₓ₁Co_{y1}M_{(1-x1-y1)}(OH)₂, where 0<x1< 1, 0<y1< 1, and 0<x1+y1< 1.

It can be understood that the addition amounts of the nickel salt, the cobalt salt, and the M-containing salt satisfy the stoichiometric ratio of the elements in the chemical formula of the ternary hydroxide precursor.

The concentration of the salt solution is in a range from 0.1 mol/L to 10 mol/L. The concentration of the alkali solution is in a range from 0.1 mol/L to 10 mol/L. The precipitation is performed at a temperature in a range from 20 °C to 100 °C for a time period in a range from 0.5 h to 30 h.

Specifically, the concentrations of the salt solution and the alkali solution can be independently selected from 0.1 mol/L, 1 mol/L, 2 mol/L, 3 mol/L, 4 mol/L, 6 mol/L, 8 mol/L, or 10 mol/L.

Specifically, the temperature for the precipitation can be 20 °C, 30 °C, 40 °C, 50 °C, 60 °C, 70 °C, 80 °C, 90 °C, 95 °C, or 100 °C; and the time period for the precipitation can be 0.5 h, 1 h, 2 h, 3 h, 5 h, 10 h, 15 h, 20 h, 25 h, or 30 h, etc.

Other specific values within the above numerical ranges can be chosen, which will not be reiterated herein.

In some embodiments, after the steps of sintering, the method further includes jaw crushing and pulverizing processes, thereby obtaining the ternary cathode material with a particle size of 3 µm to 15 µm after the pulverization.

An embodiment of the present application further provides a positive electrode plate, which includes a current collector and a cathode active layer disposed on a surface of the current collector. The cathode active layer includes the above-described composite cathode material or the composite cathode material prepared by the above-described preparation method.

The positive electrode plate can improve the high-temperature storage performance and rate performance of the battery.

In some embodiments, the cathode active layer further includes at least one of a binder or a conductive agent.

The conductive agent can be that commonly used in the art, including but not limited to at least one of graphite, carbon nanotubes, nanofibers, carbon black, or graphene. Specifically, the conductive agent can be selected from at least one of SP, KS-6, acetylene black, Ketjenblack ECP with a branched structure, SFG-6, vapor-grown carbon fiber (VGCF), carbon nanotubes (CNTs), graphene, or a composite conductive agent thereof.

The binder can be that commonly used in the art, such as polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, hydrogenated nitrile butadiene rubber, styrene-butadiene rubber (SBR), polyacrylic acid (PAA), etc.

The current collector can be that commonly used in the art, such as a metal foil or a composite current collector. For example, an aluminum foil can be used as the metal foil, which will not be described in detail herein.

An embodiment of the present application further provides a battery, which includes the above-described composite cathode material, or the composite cathode material prepared by the above-described method for preparing the composite cathode material, or the above-described positive electrode plate.

The battery has superior high-temperature storage performance and rate performance.

The battery further includes a negative electrode plate and a separator. The negative electrode plate and the separator can be those commonly used in the art.

The battery further includes an electrolyte. The electrolyte can be that commonly used in the art. For example, if the battery is a lithium-ion battery, the electrolyte includes a lithium-ion electrolyte salt and a solvent

As an example, the lithium-ion electrolyte salt is selected from at least one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluorobis(oxalato)phosphate (LiDFOP), Li(FSO₂)₂N, LiCF₃SO₃, or lithium tetrafluoro(oxalate)phosphate (LiTFOP). The solvent can be selected from fluoroethylene carbonate (FEC), ethylene carbonate (EC), propylene carbonate (PC), ethylmethyl carbonate (EMC), or diethyl carbonate (DEC).

In some embodiments, the battery is a secondary battery.

Another embodiment of the present application provides an electrical device, which includes the above-described battery.

The electrical device has superior rate performance and cycling performance.

The electrical device can include but is not limited to, a mobile phone, a notebook computer, an electric vehicle, a ship, a satellite, etc.

The present application will be described below with reference to the specific embodiments. However, the present application is not limited to the following embodiments. It should be understood that the appended claims summarize the scope of the present application. Under the guidance of the concept of the present application, those skilled in the art will appreciate that certain modifications to the embodiments of the present application are within the spirit and scope of the claims of the present application.

### Example

The parts mentioned in the following examples are parts by mass.

### Example 1

(1) LiNi_{0.6}Co_{0.1}Mn_{0.3}O₂ (also referred to as NCM613) as the ternary cathode bulk was provided, and the particle size thereof was 3 µm to 15 µm.
(2) 2500g of the ternary cathode bulk was mixed with 17.5g of lithium phosphate and 6.0g of magnesium oxide in solid phase, and sintered at 600 °C for 15 hours in an air atmosphere to obtain a cathode material preform.

The composition of the phosphorus-containing coating layer of the cathode material preform was analyzed by using an energy dispersive X-ray spectrometer (EDS). The composition included the ternary bulk elements Ni, Co, and Mn, and the coating elements P, wherein the mass ratio of the P elements to the ternary cathode bulk was 0.2%.

The thickness (T1) of the phosphorus-containing coating layer of the cathode material preform was tested by using a transmission electron microscope (TEM, Tecnai G2 F30).

(3) 2500g of the cathode material preform was mixed with 12.5g of boron oxide and 7.2g of magnesium oxide in solid phase, and sintered at 300°C for 8 hours in an air atmosphere to form a boron-containing coating layer, thereby obtaining the cathode material.

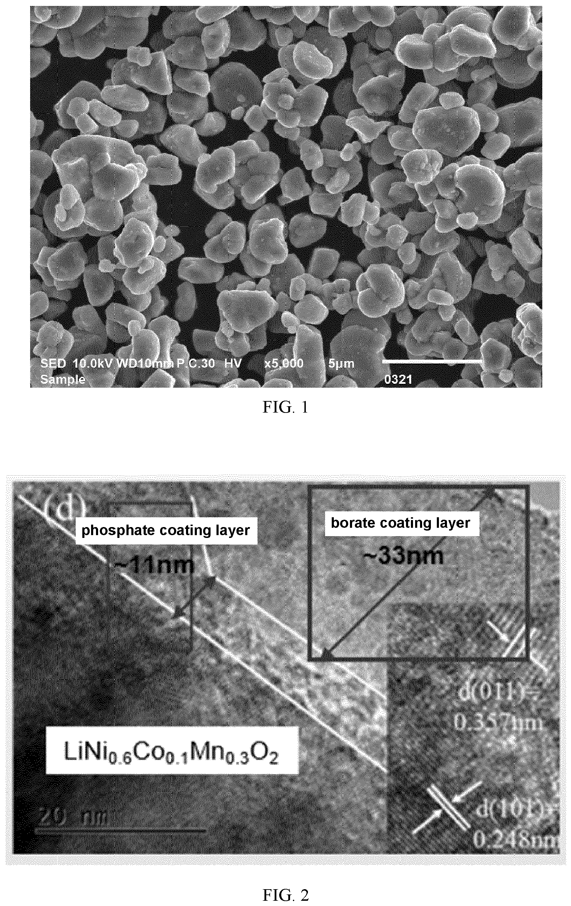

The cathode material was observed under a scanning electron microscope. The SEM image is shown in FIG. 1. An obvious coating layer on the surface of the ternary material can be clearly observed.

The total thickness (T) of the coating layer of the cathode material was tested by using the transmission electron microscope (TEM, Tecnai G2 F30). Then the thickness (T2) of the boron-containing coating layer satisfies T2=T-T1. The specific results are shown in Tables 1-1 and 1-2.

The composition of the coating layer of the cathode material preform was analyzed by using EDS. The composition included the bulk elements Ni, Co, and Mn, and the coating elements P and B, wherein the mass ratios of the P elements and the B elements to the ternary cathode bulk were 0.2% and 0.08%, respectively.

(4) The cathode material prepared above was formed into a positive electrode plate by using the following method. An appropriate amount of the cathode material prepared in the example was weighed and assembled into a button-type lithium-ion battery, wherein the mass ratio of the cathode material to the conductive carbon black was 90wt%: 10wt%, the solvent was N-methyl pyrrolidone (NMP), which was dried in a vacuum oven at 80°C for 24 hours to obtain the electrode plate with a density of 1.2 mg/cm², and then the lithium-ion battery was assembled.

### (5) Tests:

1. The high-temperature storage performance of the button-type lithium-ion batteries was tested. The test method was as follows.

The fully charged (4.4V) button-type lithium-ion batteries were disassembled after respectively storing for 30 days and 60 days at 60 °C. The positive electrode plate was cleaned with dimethyl carbonate (DMC), and after being dried, the cathode active material layer was scraped off therefrom. The scraped material was dissolved in aqua regia by heating for 30 minutes, and the amounts of Ni, Co, and Mn in the solution was tested using an inductively coupled plasma (ICP) spectrometer. The test results are shown in Table 2.

2. The rate performance of the lithium-ion batteries was tested.

The cathode materials prepared in the examples and comparative examples were cycled and tested for rate performance at 25°C and 45°C. The test method was as follows.

The cathode materials were assembled into button-cell batteries. The mass ratio of the ternary cathode material to the conductive carbon black was 90wt%:10wt%. The solvent was NMP. The surface density of the electrode plate of the battery was 1.8 mg/cm². At 25°C and between 2.8 V and 4.4 V, the batteries were charged and discharged for 1 cycle at a rate of 0.1C/0.1C, and charged and discharged at rates of 0.5C/0.1C, 0.5C/0.2C, 0.5C/0.5C, and 0.5C/1C. Then the batteries were cycled respectively at 25 °C and 45 °C for 50 cycles at a rate of 0.5C/1C. The test results are shown in Table 2.

### Examples 2 to 6

Examples 2 to 6 were substantially the same as Example 1, except that the sintering temperatures in steps (2) and (3) were different from those in Example 1, so that the thicknesses of the coating layers of the cathode materials were different from that in Example 1.

The other steps were the same as those in Example 1. The specific parameters and the test results are shown in Tables 1-1 and 1-2.

### Examples 7 to 11

Examples 7 to 11 were substantially the same as Example 1, except that the amount of the phosphate in step (2) or the amount of the boride in step (3) was adjusted to be different from that in Example 1, so that the mass ratios of the cathode bulk, the phosphate, and the boride were different from that in Example 1.

The other steps were the same as those in Example 1. The specific parameters and the test results are shown in Tables 1-1 and 1-2.

### Examples 12 to 16

Examples 12 to 16 were substantially the same as Example 1, except that the type of the phosphate in step (2) or the type of the boride in step (3) was different from that in Example 1.

The other steps were the same as those in Example 1. The specific parameters and the test results are shown in Tables 1-1 and 1-2.

### Comparative Example 1

Comparative Example 1 was substantially the same as Example 1, except that in Comparative Example 1, the boride in step (3) was replaced with an equivalent amount of the phosphate in step (2).

The other steps were the same as those in Example 1. The specific parameters and the test results are shown in Tables 1-1 and 1-2.

### Comparative example 2

Comparative Example 1 was substantially the same as Example 1, except that in step (1) of Comparative Example 1, the phosphate was replaced with an equivalent amount of the boride.

The other steps were the same as those in Example 1. The specific parameters and the test results are shown in Tables 1-1 and 1-2.

### Comparative example 3

Comparative Example 3 was substantially the same as Example 1, except that in Comparative Example 3, step (3) of Example 1 was performed before step (2) for the ternary cathode bulk, i.e., firstly forming the boron-containing coating layer, and then forming the phosphorus-containing coating layer.

The other steps were the same as those in Example 1. The specific parameters and the test results are shown in Tables 1-1 and 1-2.

### Comparative Example 4

The ternary cathode bulk was not coated. The other steps were the same as those in Example 1. The specific parameters and the test results are shown in Tables 1-1 and 1-2.

The specific parameters and the test results of the examples and the comparative examples are shown in Tables 1-1 and 1-2, wherein the mass ratio of the cathode bulk, the phosphate, and the boride is represented by m1:m2:m3; the thickness of the phosphorus-containing coating layer is represented by T1; the thickness of the boron-containing coating layer is represented by T2; the total thickness of the coating layer is represented by T; the sintering temperatures of steps (2) and (3) are represented by H1 and H2, respectively; and the molar ratio of P elements to B elements in the coating layer is represented by P:B.

**Table 1-1**

| | Phosphate | Boride | m1:m2:m3 | H1 (°C) | H2 (°C) | Phosphorus-containing coating layer | T1 (nm) |
|---|---|---|---|---|---|---|---|
| Example 1 | Li₃PO₄ | B₂O₃ | 1:0.007:0.005 | 600°C | 300°C | LiMgPO₄ | 12 |
| Example 2 | Li₃PO₄ | B₂O₃ | 1:0.007:0.005 | 550°C | 300°C | LiMgPO₄ | 10 |
| Example 3 | Li₃PO₄ | B₂O₃ | 1:0.007:0.005 | 450°C | 300°C | LiMgPO₄ | 8 |
| Example 4 | Li₃PO₄ | B₂O₃ | 1:0.007:0.005 | 600°C | 250°C | LiMgPO₄ | 13 |
| Example 5 | Li₃PO₄ | B₂O₃ | 1:0.007:0.005 | 600°C | 350°C | LiMgPO₄ | 12 |
| Example 6 | Li₃PO₄ | B₂O₃ | 1:007:0.005 | 600°C | 450°C | LiMgPO₄ | 10 |
| Example 7 | Li₃PO₄ | B₂O₃ | 1:0.014:0.005 | 600°C | 300°C | LiMgPO₄ | 20 |
| Example 8 | Li₃PO₄ | B₂O₃ | 1:0.042:0.005 | 600°C | 300°C | LiMgPO₄ | 38 |
| Example 9 | Li₃PO₄ | B₂O₃ | 1:0.007:0.01 | 600°C | 300°C | LiMgPO₄ | 65 |
| Example 10 | Li₃PO₄ | B₂O₃ | 1:0.007:0.03 | 600°C | 300°C | LiMgPO₄ | 11 |
| Example 11 | Li₃PO₄ | B₂O₃ | 1:0.007:0.06 | 600°C | 300°C | LiMgPO₄ | 10 |
| Example 12 | AlPO₄ | B₂O₃ | 1:0.007:0.005 | 600°C | 300°C | LiAl_{0.4}Mg_{0.4}PO₄ | 13 |
| Example 13 | LaPO₄ | B₂O₃ | 1:0.007:0.005 | 600°C | 300°C | LiLa_{0.4}Mg_{0.4}PO₄ | 11 |
| Example 14 | SrPO₄ | B₂O₃ | 1:0.007:0.005 | 600°C | 300°C | LiSr_{0.4}Mg_{0.4}PO₄ | 12 |
| Example 15 | Li₃PO₄ | Li₃BO₃ | 1:0.007:0.005 | 600°C | 300°C | LiMgPO₄ | 14 |
| Example 16 | Li₃PO₄ | H₃BO₃ | 1:0.007:0.005 | 600°C | 300°C | LiMgPO₄ | 13 |
| Comparative Example 1 | Li₃PO₄ | Li₃PO₄ | 1:0.007:0.005 | 600°C | 300°C | LiMgPO₄ | 12 |
| Comparative Example 2 | B₂O₃ | B₂O₃ | 1:0.007:0.005 | 600°C | 300°C | LiMgBO₃ | 10 |
| Comparative Example 3 | B₂O₃ | Li₃PO₄ | 1:0.007:0.005 | 600°C | 300°C | LiMgBO₃ | 12 |
| Comparative Example 4 | / | / | / | / | / | / | / |

| | | | | | | | |
|---|---|---|---|---|---|---|---|
| Note: "/" represents that the step was not performed or the structure does not exist. | | | | | | | |

**Table 1-2**

| | Boron-containing coating layer | T2 (nm) | Total composition of coating layer | P:B | T (nm) |
|---|---|---|---|---|---|
| Example 1 | Li₃BO₃ | 11 | Li_{1.55}Mg_{0.6}P_{0.6} B_{0.75}O₄ | 1:1.25 | 23 |
| Example 2 | Li₃BO₃ | 10 | Li_{1.70}Mg_{0.57}P_{0.57} B_{0.77}O₄ | 1:1.35 | 20 |
| Example 3 | Li₃BO₃ | 8 | Li_{1.77}Mg_{0.55}P_{0.55} B_{0.76}O₄ | 1:1.38 | 16 |
| Example 4 | Li₃BO₃ | 13 | Li_{1.54}Mg_{0.61}P_{0.61} B_{0.73}O₄ | 1:1.20 | 26 |
| Example 5 | Li₃BO₃ | 11 | Li_{1.41}Mg_{0.62}P_{0.62} B_{0.75}O₄ | 1:1.21 | 23 |
| Example 6 | Li₃BO₃ | 9 | Li_{1.70}Mg_{0.57}P_{0.57} B_{0.77}O₄ | 1:1.35 | 18 |
| Example 7 | Li₃BO₃ | 11 | Li_{1.25}Mg_{0.72}P_{0.72} B_{0.57}O₄ | 1:0.79 | 33 |
| Example 8 | Li₃BO₃ | 12 | Li_{0.98}Mg_{0.81}P_{0.81} B_{0.45}O₄ | 10.56 | 50 |
| Example 9 | Li₃BO₃ | 11 | Li_{0.57}Mg_{0.89}P_{0.89} B_{0.4}O₄ | 1:0.45 | 76 |
| Example 10 | Li₃BO₃ | 33 | Li_{2.18}Mg_{0.50}P_{0.50} B_{0.74}O₄ | 1:1.48 | 44 |
| Example 11 | Li₃BO₃ | 59 | Li_{2.02}Mg_{0.49}P_{0.49} B_{0.85}O₄ | 1:1.73 | 69 |
| Example 12 | Li₃BO₃ | 11 | Li_{1.55}Al_{0.24}Mg_{0.24}P_{0.6}B_{0.75}O₄ | 1:1.25 | 24 |
| Example 13 | Li₃BO₃ | 11 | Li_{1.55}La_{0.25}Mg_{0.25}P_{0.6}B_{0.75}O₄ | 1:1.25 | 22 |
| Example 14 | Li₃BO₃ | 11 | Li_{1.55}Sr_{0.25}Mg_{0.25}P_{0.6}B_{0.75}O₄ | 1:1.25 | 23 |
| Example 15 | L₁₃BO₃ | 11 | Li_{1.55}Mg_{0.6}P_{0.6}B_{0.75}O₄ | 1:1.25 | 25 |
| Example 16 | Li₃BO₃ | 11 | Li_{1.41}Mg_{0.62}P_{0.62} B_{0.75}O₄ | 1:1.21 | 24 |
| Comparative Example 1 | Li₃PO₄ | 10 | LiMgPO₄ | / | 22 |
| Comparative Example 2 | Li₃PO₄ | 13 | LiMgBO₃ | / | 23 |
| Comparative Example 3 | Li₃PO₄ | 14 | Li_{0.95}Mg_{0.73}P_{0.68} B_{0.73}O₄ | 1:1.07 | 26 |
| Comparative Example 4 | / | / | / | / | / |

| | | | | | |
|---|---|---|---|---|---|
| Note: "/" represents that the step was not performed or the structure does not exist. | | | | | |

The performance test results of the embodiments and comparative examples are shown in Table 2.

**Table 2**

| | 0.5C/0.1C Discharge capacity (mAh/g) | 0.5C /0.2C Discharge capacity (mAh/g) | 0.5C /0.5C Discharge capacity (mAh/g) | 0.5C /1.0C Discharge capacity (mAh/g) | 0.5C/1C Capacity retention rate at 50^{th} cycle (%) | After 60-day storage at 4.4V, 60°C, total dissolution of Ni, Co, and Mn (ppm) |
|---|---|---|---|---|---|---|
| Example 1 | 194.2 | 189.0 | 183.9 | 177.7 | 97.12 | 989 |
| Example 2 | 194.0 | 188.9 | 184.1 | 177.9 | 97.01 | 1055 |
| Example 3 | 193.7 | 188.0 | 183.4 | 177.1 | 96.41 | 1207 |
| Example 4 | 194.5 | 189.3 | 184.4 | 178.0 | 97.17 | 957 |
| Example 5 | 193.9 | 188.6 | 183.2 | 177.0 | 96.93 | 1035 |
| Example 6 | 193,8 | 188.2 | 182.8 | 177.1 | 96.99 | 1298 |
| Example 7 | 194.2 | 188.8 | 183.4 | 177.3 | 97.24 | 935 |
| Example 8 | 194.9 | 191.2 | 187.1 | 183.0 | 97.59 | 901 |
| Example 9 | 193.9 | 188.1 | 183.5 | 177.3 | 97.40 | 879 |
| Example 10 | 194.8 | 191.0 | 177.8 | 182.9 | 97.60 | 885 |
| Example 11 | 193.8 | 188.2 | 183.4 | 177.5 | 97.01 | 1204 |
| Example 12 | 194.1 | 188.7 | 183.4 | 177.3 | 97.16 | 985 |
| Example 13 | 193.9 | 188.5 | 183.3 | 177.1 | 97.13 | 1016 |
| Example 14 | 193.7 | 188.8 | 183.5 | 177.4 | 97.05 | 1001 |
| Example 15 | 194.3 | 189.1 | 184.2 | 177.9 | 97.09 | 995 |
| Example 16 | 194.2 | 189.5 | 184.4 | 177.8 | 97.08 | 1022 |
| Comparative Example 1 | 191.5 | 185.7 | 180.4 | 173.8 | 92.23 | 6812 |
| Comparative Example 2 | 191.2 | 185.6 | 180.1 | 173.5 | 92.15 | 6732 |
| Comparative Example 3 | 192.4 | 186.7 | 180.9 | 175.3 | 92.65 | 5698 |
| Comparative Example 4 | 189.6 | 183.5 | 177.3 | 172,1 | 87.98 | 15980 |

The transmission microscope TEM image of the composite cathode material prepared in Example 10 is shown in FIG. 2, from which the phosphorus-containing coating layer (i.e., the phosphate coating layer) and the boron-containing coating layer (i.e., the borate coating layer) can be clearly seen. The energy spectrum EDS image of the composite cathode material prepared in Examples 1 and 2 is shown in FIG. 2, and the energy spectrum analysis results are shown in Table 3.

**Table 3**

| Element | | (keV) | Mass% | Sigma | Atom% |
|---|---|---|---|---|---|
| Al | K | 1.486 | 0.78 | 0.09 | 0.80 |
| Mg | K | 4.508 | 0.74 | 0.07 | 0.79 |
| Mn | K | 5.894 | 26.28 | 0.31 | 28.19 |
| Co | K | 6.924 | 8.25 | 0.23 | 8.07 |
| Ni | K | 7.471 | 62.24 | 0.60 | 61.08 |
| P | L | 2.042 | 0.89 | 0.20 | 0.56 |
| B | L | 2.042 | 0.82 | 0.08 | 0.51 |
| Total | | | 100.00 | | 100.00 |

In the above table, "Element" represents the element type, "Mass%" represents the mass proportion, "Atom%" represents the atomic number proportion, "keV" represents energy, and "Sigma" represents the variance of mass proportion.

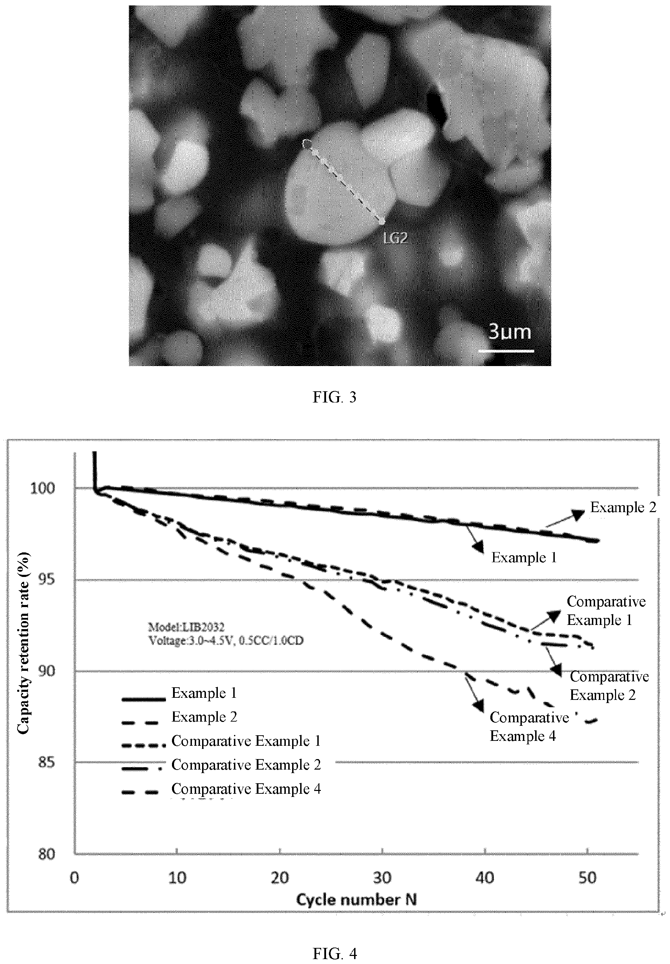

The cycling performances at 45°C for batteries prepared in Example 1, Example 2, Comparative Example 1, Comparative Example 2, and Comparative Example 4 are compared in FIG. 4. The abscissa represents the cycle number, denoted as N.

Analysis of the data from Tables 1-1, 1-2 and 2 reveals that the coating layer in the cathode material of the present application can inhibit the dissolution of transition metals, which can effectively stabilize the interface between the cathode and the electrolyte in batteries, reducing corrosion and structural damage at the interface, slowing down the growth of DCR, and enhancing the high-temperature storage performance and rate performance of the batteries. Additionally, the compounds with low melting points formed from boron elements with other substances can fill the voids in the grain boundaries, further preventing the grain boundary from forming cracks during long-term cycling or at high rates. This not only further enhances the structural stability and mechanical strength of the coating layer, but also increases the lithium ion and electronic conductivity of the coating layer, thus simultaneously improving the high-temperature storage performance and rate performance of the battery.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. A composite cathode material, comprising a cathode bulk and a coating layer disposed on a surface of the cathode bulk, wherein the coating layer comprises a subsurface layer and a surface layer disposed on the surface of the cathode bulk in sequence; the subsurface layer comprises a phosphorus-containing electrolyte, and the surface layer comprises a boron-containing electrolyte;
the phosphorus-containing electrolyte is represented by Liₐ₁X1_{b1}PO₄, where 0<a1≤5, and 0≤b1≤5;
the boron-containing electrolyte is represented by Liₐ₂X2_{b2}B ᵣ₁O₃, where 0≤a2≤3, 0≤b2≤3, and 0<r1≤5; and
X1 and X2 are independently selected from one or more of Ni, Co, Mn, Al, Y, Zr, Sr, La, Ti, Mg, Zn, Fe, Nb , Ge, or Ce.

2. The composite cathode material according to claim 1, wherein only one of b1 and b2 is equal to 0.

3. The composite cathode material according to claim 1 or 2, wherein 1≤a1≤1.1; and/or 1≤a2≤3.

4. The composite cathode material according to any one of claims 1 to 3, wherein the coating layer satisfies at least one of condition (a), (b), or (c):
(a) a thickness of the coating layer is in a range from 5 nm to 200 nm;
(b) a mass ratio of the coating layer to the cathode bulk is in a range from 0.001:1 to 0.5:1;
(c) in the coating layer, the subsurface layer and the surface layer are bonded through O-B-P bonds.

5. The composite cathode material according to any one of claims 1 to 4, wherein in the coating layer, a molar ratio of P elements to B elements is in a range from 1:0.01 to 1:10.

6. The composite cathode material according to any one of claims 1 to 5, wherein a thickness ratio of the subsurface layer to the surface layer is in a range from 1 :0.01 to 1:10.

7. The composite cathode material according to any one of claims 1 to 6, wherein the coating layer comprises a material represented by formula I:
Liₐ₃X3_{b3}T_{c}O_{d} I;
wherein X3 comprises one or more of Ni, Co, Mn, Al, Y, Zr, Sr, La, Ti, Mg, Zn, Fe, Nb, Ge, or Ce; T comprises P and B; 0<a3≤2, 0<b3≤1, 0<c≤1, and 3≤d≤4.

8. The composite cathode material according to any one of claims 1 to 7, wherein the cathode bulk satisfies at least one of condition (d) or (e):
(d) the cathode bulk is a ternary cathode bulk, represented by Li_{w}NiₓCo_{y}M_{(1-x-y)}O₂, where 0.95≤w≤1.05, 0<x< 1, 0<y<1, 0<x+y< 1, and M comprises at least one of Mn, Al, B, Y, Zr, Sr, La, Ti, Mg, Zn, Fe, Nb, Ge, or Ce;
(e) a particle size of the cathode bulk is in a range from 3 µm to 15 µm.

9. A composite cathode material, comprising a cathode bulk and a coating layer disposed on a surface of the cathode bulk, wherein the coating layer comprises a subsurface layer and a surface layer disposed on the surface of the cathode bulk in sequence; the subsurface layer comprises a phosphorus-containing electrolyte, and the surface layer comprises a boron-containing electrolyte; the coating layer comprises a material represented by formula I:
Liₐ₃X3_{b3}T_{c}O_{d} I;
wherein X3 comprises one or more of Ni, Co, Mn, Al, Y, Zr, Sr, La, Ti, Mg, Zn, Fe, Nb, Ge, or Ce; T comprises P and B; 0<a3≤2, 0<b3≤1, 0<c≤1, 3≤d≤4.

10. A composite cathode material, comprising a cathode bulk and a coating layer disposed on a surface of the cathode bulk, wherein the coating layer comprises a subsurface layer and a surface layer disposed on the surface of the cathode bulk in sequence; the subsurface layer comprises a phosphorus-containing electrolyte, and the surface layer comprises a boron-containing electrolyte; in the coating layer, the subsurface layer and the surface layer are combined through O-B-P bonds.

11. A method for preparing the composite cathode material according to any one of claims 1 to 10, comprising following steps of:
performing a first sintering to the cathode bulk mixed with a phosphate, thereby forming a cathode material preform; and
performing a second sintering to the cathode material preform mixed with a boride, thereby forming the composite cathode material.

12. The method according to claim 11, wherein a mass ratio of the cathode bulk, the phosphate, and the boride is 1:(0.0005 to 0.5):(0.0005 to 0.5).

13. The method according to any one of claims 11 to 12, satisfying at least one of condition (f) or (g):
(f) the first sintering is performed at a temperature in a range from 200 °C to 800 °C for a time period in a range from 5 hours (h) to 30 h;
(g) the second sintering is performed at a temperature in a range from 200 °C to 800 °C for a time period in a range from 5 h to 30 h.

14. The method according to any one of claims 11 to 13, wherein satisfying at least one of condition (h) or (i):
(h) the phosphate comprises at least one of nickel phosphate, cobalt phosphate, manganese phosphate, lithium phosphate, aluminum phosphate, zirconium phosphate, titanium phosphate, yttrium phosphate, strontium phosphate, tungsten phosphate, lanthanum phosphate, ammonium dihydrogen phosphate, or diammonium hydrogen phosphate;
(i) the boride comprises at least one of boric acid, boron oxide, lithium borate, or sodium borohydride.

15. A positive electrode plate, comprising a current collector and a cathode active layer disposed on a surface of the current collector, wherein the cathode active layer comprises the composite cathode material according to any one of claims 1 to 10.

16. A battery, comprising the composite cathode material according to any one of claims 1 to 10 or the positive electrode plate according to claim 15.

17. An electrical device, comprising the battery according to claim 16.
